# EUROPEAN PATENT SPECIFICATION

(11) **EP 0 366 810 B1**
(45) Date of publication and mention of the grant of the patent: **19.01.1994**
(21) Application number: 89904233.7
(22) Date of filing: 11.04.1989
(51) Int. Cl.: B29C 45/66

(54) **DIRECT DRIVEN MOLD CLAMPING APPARATUS**
GIESSFORMKLEMMVORRICHTUNG MIT DIREKTANTRIEB
DISPOSITIF DE SERRAGE DE MOULE A ENTRAINEMENT DIRECT

(30) Priority: 06.05.1988 JP 108952/88
(43) Date of publication of application: 09.05.1990
(73) Proprietor: FANUC LTD., Minamitsuru-gun, Yamanashi 401-05 (JP)
(72) Inventor: INABA, Seiuemon, Asigarashimo-gun Kanagawa 250-06 (JP)
(74) Representative: Billington, Lawrence Emlyn
(86) International application number: JP8900391
(87) International publication number: WO8910830

(56) References cited:
- DE-A- 2 840 710
- JP-A-61 120 715
- JP-A-62 156 919
- US-A- 4 588 364
- PATENT ABSTRACTS OF JAPAN, vol. 9, no. 272 (M-425)[1995], 30th October 1985;& JP-A-60 115 419 (FANUC K.K.) 21-06-1985

## Description

The present invention relates to a mold clamping apparatus for use in an injection molding machine, and more particularly, to a direct drive type mold clamping apparatus for use in a plastic injection molding machine.

In a plastic injection molding machine, a motor-operated mold clamping machine is employed, which is of a type wherein a movable platen is driven by a servomotor through a crank mechanism. A mold clamping apparatus of this kind has a servomotor which is coupled to a driving shaft of the crank mechanism through a power transmission mechanism which is comprised of components such as gear, belt and the like, as disclosed in JP-A-60-115419.

In this connection, during operation of the mold clamping apparatus, backlash is liable to occur in the power transmission mechanism interposed between the servomotor and the crank mechanism, and elongation, deformation and the like are also liable to occur in its structural components. In other words, the mold clamping apparatus is low in its rigidity in power transmission, and is also low in operating response. Accordingly, a rotation phase deviation can be easily occur between the servomotor and the driving shaft of the crank mechanism. When the rotation phase deviation is produced at the input side of the crank mechanism, such deviation is enlarged in the crank mechanism, resulting in a great error in controlling linear motion of the movable platen which is coupled to the output side of the crank mechanism. Moreover, as a result of provision of the power transmission mechanism between the servomotor and the crank mechanism, the mold clamping apparatus has components which are increased in number, and accordingly, the mold clamping apparatus is high in costs for production and maintenance.

The object of the present invention is to provide a direct drive type mold clamping apparatus for use in an injection molding machine, which has an increased rigidity in power transmission and is low in number of its structural component parts, so that it has a good operating response and reliability and may be low in costs.

To achieve the above-mentioned object, a direct drive type mold clamping apparatus of the present invention, which is mounted on an injection molding machine having a movable platen, comprises a servomotor, and a crank mechanism having a driving shaft which is directly coupled to an output shaft of the servomotor. The crank mechanism operates to reciprocate the movable platen with rotation of the servomotor.

As mentioned above, according to the present invention, since the output shaft of the servomotor is directly coupled to the driving shaft of the crank mechanism, a power transmission path between the servomotor and the crank mechanism is shortened, and the resultant mold clamping apparatus has component parts which are low in number, and accordingly the mold clamping apparatus has a good operating response and reliability, and may be low in costs for production and maintenance. Developments of the invention are defined in the dependent claims.

### Brief Description of the Drawings

Fig. 1 is a plan view, partly in section, showing a direct drive type mold clamping apparatus according to an embodiment of the present invention; and
Fig. 2 is a schematic front view of the mold clamping apparatus of Fig. 1.

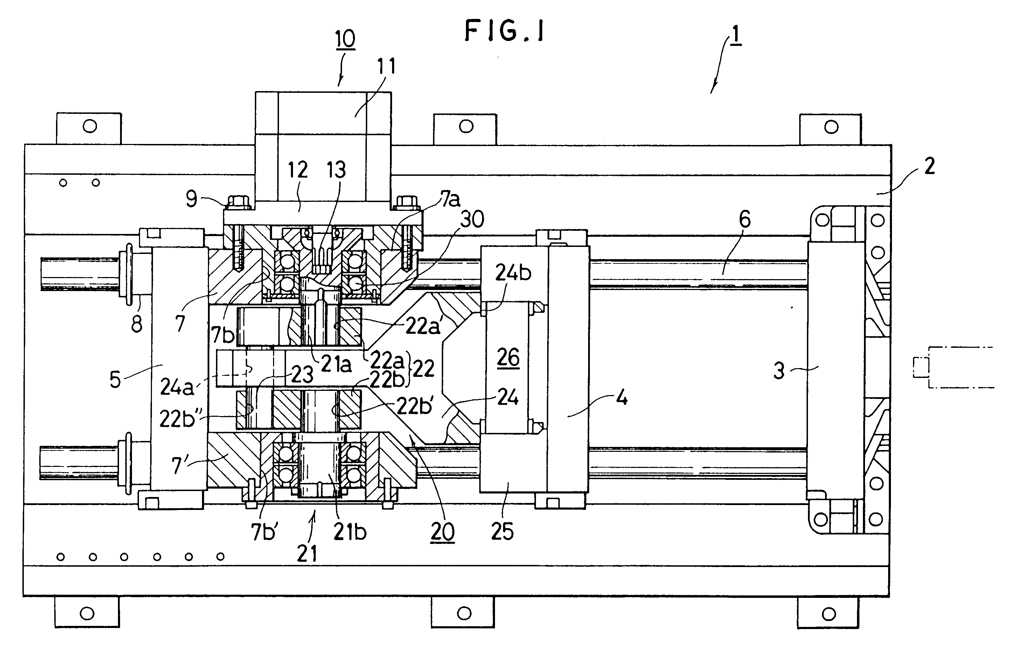

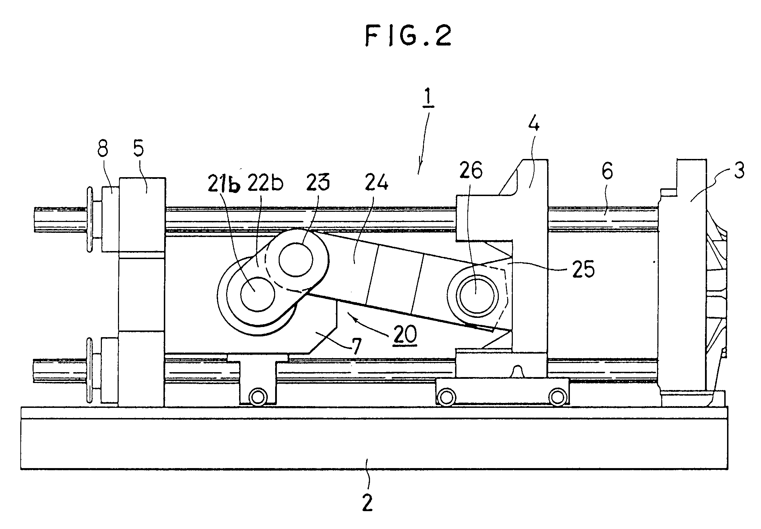

Referring to Figs. 1 and 2, a direct drive type mold clamping apparatus 1, which is mounted on a plastic injection molding machine, comprises a stationary platen 3 fixed to a platform 2 of the injection molding machine, and a rear platen 5 mounted on the platform for sliding motion over a predetermined distance for mold thickness adjustment. A movable platen 4 disposed between these platens 3 and 5 is arranged for reciprocal motion on the platform 2 and along four tie bars 6 extending between the platens 3, 5 in parallel to one another. Disposed between the movable platen 4 and the rear platen 5 are a servomotor 10, which is preferably comprised of an A.C. servomotor, and a crank mechanism 20 arranged to be driven by the servomotor 10 to reciprocate the movable platen 4.

A pair of support members 7 and 7', projecting toward the movable platen 4, are integrally fixed to the rear platen 5 at left and right edge portions of an end face of the same platen at a side thereof facing the movable platen, respectively. A tie bar nut 8, which forms part of a mold thickness adjusting mechanism, is disposed at another end face, at a side remote from the movable platen, of the rear platen 5.

The servomotor 10, which is of a type rotating at a low speed to generate a large torque, is connected with a servo circuit (not shown) which is in turn connected with a numerical control unit (not shown) of the injection molding machine. A pulse encoder 11 provided on the servomotor 10 is also connected with the servo circuit. The servomotor 10 is fixed at its flange portion 12 to an outer side face 7a of one 7 of the support members by means of bolts 9, and has its output shaft 13 which extends within a hole 7b formed in the support member 7 in the direction perpendicular to the direction along which the movable platen 4 is moved.

The crank mechanism 20 has a driving shaft 21 which is comprised of a pair of shaft members 21a and 21b fabricated separately from each other. These driving shaft members 21a, 21b are disposed in alignment with the servomotor output shaft 13, and extend through holes 7b and 7'b respectively formed in the support members 7 and 7', and are rotatably supported by these members 7, 7' through bearings 30, etc. Further, the driving shaft member 21a, disposed at a side facing the servomotor, is spline-fitted at its outer end portion around the output shaft 13 for rotation in unison with the same output shaft. That is, the driving shaft 21 of the crank mechanism 20 is direct-coupled to the servomotor output shaft 13. For this spline connection, one of the elements 13, 21a is formed with keys and another is formed with associated keyways.

The crank mechanism 20 further includes a first link 22 comprised of a pair of link members 22a and 22b which are separately fabricated from each other. These link members 22a, 22b are coupled to the driving shaft members 21a and 21b, respectively, for rotation in unison with these shaft members extending through holes 22a' and 22b' formed in inner end portions of the link members, respectively. The link members 22a, 22b are coupled to each other by means of a crank pin 23, which has opposite end portions fixedly fitted in holes (one of which is shown by reference numeral 22b'') formed in respective outer end portions of the link members.

Furthermore, the crank mechanism 20 has a second link 24 extending between the driving shaft members 21a, 21b and between the link members 22a, 22b in the direction along which the movable platen is moved, and the crank pin 23 is rotatably fitted in a hole 24a formed in an end portion of the link 24 at a side thereof facing the rear platen. The second link 24 is formed at its end portion at a side thereof facing the movable platen with holes 24b into which fitted are respective end portions of a connecting rod 26 having opposite ends thereof supported by a bracket 25, which is fixed to an end face of the movable platen 4 at the side thereof facing the rear platen. Accordingly, the rear platen-side end portion of the second link 24 is so arranged as to be rotated in unison with the crank pin 23 around the driving shaft 21, resulting in reciprocal motion of the movable platen 4 coupled to the movable platen-side end of the second link 24 when the driving shaft 21 of the crank mechanism 20 rotates in unison with the servomotor output shaft 13.

In the following, operation of the direct drive type mold clamping apparatus 1 will be explained. Upon start of mold closing operation, the servomotor 10 is driven to rotate in a predetermined rotational direction by means of the servo circuit which responds to a command signal supplied from the numerical control unit and a feedback signal supplied from the pulse encoder 11. With rotation of the servomotor, one driving shaft member 21a, fitted around and direct-coupled to the servomotor output shaft 13, of the driving shaft 21 of the crank mechanism 20, and another driving shaft member 22b are rotated in unison with the motor shaft 13, the shaft member 21b being coupled to the former shaft member 21a through one link member 22a of the first link 22, the crank pin 23 and another link member 22b. As a result, the crank pin 23 and the rear platen-side end portion of the second link 24 fitted therewith are rotated around the driving shaft 21, so that the movable platen-side end of the second link 24 is moved in the mold closing direction. Accordingly, the movable platen 4, coupled to the same link end through the connecting rod 26 and the bracket 25, is linearly moved along the tie bars 6 in the mold closing direction from its mold opening end position shown in Fig. 1. During this operation, the mold clamping apparatus 1 equipped with the crank mechanism 20, coupled directly to the motor output shaft 13 and hence having a shortened power transmission path between itself and the motor 10 and great rigidity in power transmission, responds to the operation of the motor 10 rapidly and accurately, so that the moving position of the movable platen 4 is accurately controlled, with fast response.

Thereupon, when the crank pin 23 and the associated end portion of the second link 24 are rotated over one-half of revolution around the driving shaft 21 from their mold opening end positions shown in Fig. 1, a mold clamping end state is achieved wherein the first and second links 22, 24 are axially aligned to each other. At this state, the rotation of the servomotor 10 is kept stopped.

During the mold clamping operation, a rotary motion force generated by the servomotor 10 is enlarged and converted into a linear motion force by the crank mechanism 20 to generate a great mold clamping force. For instance, the maximum mold clamping force on the order of about 30 tons is generated, with a tangential force of about 1.5 tons at the location at which the crank pin 23 is disposed, in the case that the maximum output torque of the servomotor 10 is 150 kgm, and the distances between the axis of the driving shaft 21 and that of the crank pin 23 and between the axis of the crank pin 23 and that of the connecting rod 26 are 100 mm and 350 mm, respectively.

Upon completion of mold clamping, rotation of the servomotor 10 in the aforementioned direction is started again. With this motor rotation, the first link 22 and the crank pin 23 of the crank mechanism 20 are rotated around the driving shaft 21 to cause linear movement of the movable platen 4 in the mold opening direction through the second link 24, the connecting rod 26 and the bracket 25. Thereafter, the movable platen 1 reaches its mold opening end position of Fig. 1.

The present invention is not limited to the aforementioned embodiment, and various modifications thereof may be made. For instance, although the servomotor 10 is comprised of an A.C. servomotor in the above-mentioned embodiment, a D.C. servomotor may be employed. The first link 22 may be formed into a disc.

## Claims

1. A direct drive type mold clamping apparatus (1) for use in an injection molding machine having a movable platen (4), comprising:
a servomotor (10) having an output shaft (13); and
a crank mechanism (20) having a driving shaft (21) directly coupled to said output shaft (13) of said servomotor (10), for reciprocating the movable platen (4) with rotation of said servomotor (10).

2. A direct drive type mold clamping apparatus according to claim 1, wherein said injection molding machine has a rear platen (5), and said servomotor (10) is fixed to said rear platen (5).

3. A direct drive type mold clamping apparatus according to claim 2, further comprising:
a support member (7) fixed to said rear platen (5) and projecting toward said movable platen (4);
wherein said servomotor (10) is fixed to said support member (7), with said output shaft (13) of said servomotor (10) extending in a direction perpendicular to a direction along which said movable platen (4) is moved, and said output shaft (13) of said servomotor (10) and said driving shaft (21) of said crank mechanism (20) are axially aligned and fitted to each other for integral rotation.

4. A direct drive type mold clamping apparatus according to claim 3, wherein said support member (7) is formed with a hole (7b), and said output shaft (13) of said servomotor (10) and said driving shaft (21) of said crank mechanism (20) are fitted within said hole (7b).

5. A direct drive type mold clamping apparatus according to any preceding claim, wherein said crank mechanism (20) includes a first link (22) coupled at its inner end portion to said driving shaft (21); a crank pin (23) coupled to an outer end portion of said first link (22); and a second link (24) having one end portion coupled to said crank pin (23) and another end portion coupled to said movable platen (4).

6. A direct drive type mold clamping apparatus according to claim 5, further comprising:
a connecting rod (26) having opposite ends supported by said movable platen (4);
wherein said driving shaft (21) has a pair of driving shaft members (21a,21b) which are axially aligned to each other; said first link (22) having a pair of link members (22a,22b) coupled at their outer end portions to each other by means of said crank pin (23), each link member (22a,22b) being coupled at its inner end portion to a corresponding one of said driving shaft members (21a,21b) for rotation in unison therewith; said second link (24) extending between said pair of driving shaft members (21a,21b) and between said pair of link members (22a,22b), and having one end portion thereof supported by said crank pin (23) for relative rotation thereto, and another end portion thereof supported by said connecting rod (26) for relative rotation thereto.

## Patentansprüche

1. Formklemmvorrichtung (1) mit Direktantrieb für den Gebrauch in einer Spritzgußmaschine, die eine bewegliche Traverse (4) hat, die umfaßt:
einen Servomotor (10), der eine Abgabewelle (13) hat; und
einen Kurbelmechanismus (20), der eine Antriebswelle (21) hat, die direkt mit der Abgabewelle (13) des Servomotors (10) gekoppelt ist, um die bewegliche Traverse (4) aufgrund der Drehbewegung des Servomotors (10) hin- und herzubewegen.

2. Formklemmvorrichtung mit Direktantrieb nach Anspruch 1, bei der die Einspritzformmaschine eine hintere Traverse (5) hat und der Servomotor (10) an der hinteren Traverse (5) befestigt ist.

3. Formklemmvorrichtung mit Direktantrieb nach Anspruch 2, die weiter umfaßt:
ein Stützteil (7), das an der hinteren Traverse (5) befestigt ist und sich in Richtung auf die bewegliche Traverse (4) erstreckt;
wobei der Servomotor (10) am Stützteil (7) befestigt ist, wobei die Abgabewelle (13) des Servomotors (10), die sich in einer Richtung senkrecht zu einer Richtung ausdehnt, entlang welcher die bewegliche Traverse (4) bewegt wird, und die Abgabewelle (13) des Servomotors (10) und die Antriebswelle (13) des Servomotors (10) und die Antriebswelle (21) des Kurbelmechanismus (20) axial fluchtend ausgerichtet und ineinander eingepaßt sind, um sich gemeinsam zu drehen.

4. Formklemmvorrichtung mit Direktantrieb nach Anspruch 3, wobei der Stützteil (7) mit einem Loch (7b) gebildet ist, und wobei die Abgabewelle (13) des Servomotors (10) und die Antriebswelle (21) des Kurbelmechanismus (20) im Loch (7b) eingepaßt sind.

5. Formklemmvorrichtung mit Direktantrieb nach einem der vorhergehenden Ansprüche, wobei der Kurbelmechanismus (20) ein erstes Zwischenstück (22) aufweist, das an seinem inneren Endteil mit der Antriebswelle (21) gekoppelt ist; einen Kurbelzapfen (23), der mit einem äußeren Endteil des ersten Zwischenstücks (22) gekoppelt ist; und ein zweites Zwischenstück (24), das einen Endteil hat, der mit dem Kurbelzapfen (23) gekoppelt ist, und ein anderen Endteil, der mit der beweglichen Traverse (4) gekoppelt ist.

6. Formklemmvorrichtung mit Direktantrieb nach Anspruch 5, die weiter umfaßt:
einen Verbindungsstab (26), der entgegengesetzte Enden aufweist, die durch die bewegliche Traverse (4) gestützt sind;
bei der die Antriebswelle (21) ein Paar von Antriebswellenteilen (21a, 21b) hat, die axial fluchtend miteinander ausgerichtet sind; wobei das erste Zwischenstück (22) ein Paar von Zwischenstückteilen (22a, 22b) hat, die an ihren äußeren Endteilen durch den Kurbelzapfen (23) miteinander gekoppelt sind, wobei jeder Zwischenstückteil (22a, 22b) an seinem inneren Endteil mit einem der entsprechenden Antriebswellenteile (21a, 21b) gekoppelt ist, um sich im Einklang damit zu drehen;
wobei das zweite Zwischenstück (24), das sich zwischen dem Paar von Antriebswellenteilen (21a, 21b) und zwischen dem Paar von Zwischenstückteilen (22a, 22b) ausdehnt, einen Endteil hat, der durch den Kurbelzapfen (23) für eine relative Drehbewegung daran gestützt ist, und einen anderen Endteil, der durch den Verbindungsstab (26) für eine relative Drehbewegung daran gestützt ist.

## Revendications

1. Un appareil de serrage de moule (1) du type à entraînement direct utilisable dans une machine de moulage par injection présentant une platine mobile (4), comprenant :
un servomoteur (10) présentant un arbre de sortie (13) ; et
un mécanisme à manivelle (20) présentant un arbre d'entraînement (21) directement couplé audit arbre de sortie (13) dudit servomoteur (10) de manière à entraîner en va-et-vient la platine mobile (4) avec la rotation dudit servomoteur (10).

2. Un appareil de serrage de moule du type à entraînement direct selon la revendication 1, dans lequel ladite machine de moulage par injection présente une platine arrière (5), ledit servomoteur (10) étant fixé à ladite platine arrière (5).

3. Un appareil de serrage de moule du type à entraînement direct selon la revendication 2, comprenant en outre :
un élément de support (7) fixé à ladite platine arrière (5) et faisant saillie en direction de ladite platine mobile (4) ;
dans lequel ledit servomoteur (10) est fixé audit élément de support (7), ledit arbre de sortie (13) dudit servomoteur (10) s'étendant dans une direction perpendiculaire à une direction le long de laquelle est déplacée ladite platine mobile (4), ledit arbre de sortie (13) dudit servomoteur (10) et ledit arbre d'entraînement (21) dudit mécanisme à manivelle (20) étant alignés axialement et adaptés l'un à l'autre en vue d'une rotation solidaire.

4. Un appareil de serrage de moule du type à entraînement direct selon la revendication 3, dans lequel ledit élément de support (7) présente un trou (7b), ledit arbre de sortie (13) dudit servomoteur (10) et ledit arbre d'entraînement (21) dudit mécanisme à manivelle (20) étant adaptés à l'intérieur dudit trou (7b).

5. Un appareil de serrage de moule du type à entraînement direct selon une quelconque revendication précédente, dans lequel ledit mécanisme à manivelle (20) comprend une première biellette (22) couplée, au niveau de sa partie d'extrémité interne, audit arbre d'entraînement (21) ; un axe de manivelle (23) couplé à une partie d'extrémité externe de ladite première biellette (22) ; et une seconde biellette (24) présentant une partie d'extrémité couplée audit axe de manivelle (23) et une autre partie d'extrémité couplée à ladite platine mobile (4).

6. Un appareil de serrage de moule du type à entraînement direct selon la revendication 5, comprenant en outre :
une tige de liaison (26) présentant des extrémités opposées supportée par ladite platine mobile (4) ;
dans lequel ledit arbre d'entraînement (21) présente une paire d'éléments d'arbre d'entraînement (21a, 21b) qui sont alignés axialement l'un à l'autre ; ladite première biellette (22) présentant une paire d'éléments de biellette (22a, 22b) couplés, au niveau de leurs parties d'extrémité externes, l'une à l'autre au moyen dudit axe de manivelle (23), chaque élément de biellette (22a, 22b) étant couplé, au niveau de sa partie d'extrémité interne, à un élément d'arbre correspondant parmi lesdits éléments d'arbre d'entraînement (21a, 21b) pour tourner en même temps que celui-ci ; ladite seconde biellette (24) s'étendant entre ladite paire d'éléments d'arbre d'entraînement (21a, 21b) et entre ladite paire d'éléments de biellette (22a, 22b), et présentant une partie d'extrémité supportée par ledit axe de manivelle (23) pour tourner par rapport à celui-ci, et une autre partie d'extrémité supportée par ladite tige de liaison (26) pour tourner par rapport à celle-ci.
